# NEW EUROPEAN PATENT SPECIFICATION

(11) **EP 2 381 283 B2**
(45) Date of publication and mention of the opposition decision: **04.01.2017**
(45) Mention of the grant of the patent: 17.07.2013
(21) Application number: 10004287.8
(22) Date of filing: 22.04.2010
(51) Int. Cl.: G02B 6/44

(54) **Optical fiber tray assembly**
Glasfaserfacheinheit
Ensemble de plateau à fibre optique

(43) Date of publication of application: 26.10.2011
(73) Proprietor: Tyco Electronics Raychem BVBA, 3010 Kessel-Lo (BE)
(72) Inventor: Diepstraten, Patrick, Jacques, Ann, 3550 Heusden-Zolder (BE); Liefsoens, Ronnie, Rosa, Georges, 3080 Tessenderlo (BE); Van Genechten, Geert, 2222 Wiekevorst (BE)
(74) Representative: Grünecker Patent- und Rechtsanwälte PartG mbB

(56) References cited:
- EP-B1- 0 692 102
- GB-A- 2 312 053
- US-A1- 2008 205 844
- DATABASE WPI Week 201016 Thomson Scientific, London, GB; AN 2010-B67591 XP002600766 & KR 2010 011 811 A (KNT CO LTD) 3 February 2010 (2010-02-03)

## Description

The present invention relates to an optical fibre tray assembly for organizing a plurality of optical fibre elements as defined in claim 1. In particular, the optical fibre tray assembly is for use in a telecommunication network.

Optical fibre organization is required wherever optical fibre elements are to be joined or to be stored outside an outer jacket of the optical fibre cable, wherein said outer jacket protects the optical fibre elements against environmental influences. Further, a plurality of optical fibre elements is required to be organized within as small a space as possible in order to provide optical fibre housings such as boxes, closures or the like in a compact form, wherein said housings are provided for sealingly and accessibly accommodating the optical fibre and their fibre connections. For solving said problem, optical fibre tray assemblies have been proposed which comprise a plurality of trays for organizing optical fibre elements therein, wherein said plurality of trays is usually supported pivotably with respect to each other. Thereby, the optical fibre elements may be operated on one tray pivoted with respect to the other trays in order to prevent interfering of the optical fibre elements organized in said other trays.

Exemplarily, EP 0 692 102 B1 provides an optical fibre tray assembly comprised of a plurality of organizer trays supported pivotably with respect to each other. Said plurality of organizer trays is arranged in series, that is in front of each other, wherein the organizing area of one organizer tray is covered by a further organizer tray provided in front of said one organizer tray. The foremost organizer tray is usually covered by a cover. Accordingly, the organizing area is accessible from a front surface side of the organizer tray in a pivoted state thereof, thereby uncovering the front surface side. Further particularly, the optical fibre tray assembly comprises a lower tray having a lower support plate which is projected on a lower front surface side thereof by a plurality of lower wall portions which forms a lower organizing area for organizing thereon at least one optical fibre element. Moreover, said lower tray has at least two lower guiding channels partially surrounding the lower organizing area, wherein each lower guiding channel is provided at a lateral area of the lower support plate for guiding therein at least one optical fibre element received by the lower guiding channel at one longitudinal end side thereof. The lower tray is provided with a lower hinge means. Said optical fibre tray assembly further comprises an upper tray having an upper support plate which provides an upper rear surface side partially covering the lower front surface side of the lower tray and which provides an upper front surface side projected by a plurality of other wall portions forming an upper organizing area for organizing at least one optical fibre element, wherein the upper support plate is projected laterally by upper hinge means. Said upper and lower hinge means cooperate with a support which arranges the lower and upper trays in series to be supported pivotably relative to each other.

A generic optical fibre tray assembly is known from GB 2 312 053 A. GB 2 312 053 A discloses an optical fibre tray assembly which comprises a drawer on which a plurality of trays are mounted by means of hinges. The trays are hingeably movable around a pivot axis on the support means of the optical fibre tray assembly. Each tray has a lower support plate from which on one surface side thereof a plurality of wall portions (a mandrel, a peripheral wall, an irregular lip, retainers and other retainers) project and form an organization area for organizing at least one optical fibre.

The drawer is provided on a peripheral wall with a guiding channel for guiding optical fibres via the hinge between the drawer and the tray so that the tray enables an organization of the optical fibre element in the tray.

The guiding channel is provided with guide formations at positions corresponding to the hinges of the trays. The hinge means of the drawer are hollow cylindrical openings through which the fibre elements can be guided. The trays can be connected by a hollow pin. The optical fibre element is guided from the drawer to the tray via the hollow hinge elements.

Further optical fibre tray assemblies based on a similar concept as described above are e.g. known from EP 0 717 860 B1_{,} EP 0 883 828 B1, US 2008/0205844 A1 and KR 20100011811 A.

However, such tray assemblies require respective space due to the arrangement of the plurality of trays in series. Furthermore, due to limited space for organizing optical fibre elements in the respective organizing area, an increased number of optical fibre elements to be organized results automatically in an increased diameter of the organizer tray. The optical fiber elements in the prior art GB 2 312 053 A have to be guided from the first tray to the adjacent second tray by the drawer, around the peripheral wall of the drawer further into an adjacent second tray.

In view of the above, it is an object of the present invention to provide an improved optical fiber tray assembly which can solve the aforementioned problems.

As a solution to these problems, the present invention proposes an optical fiber tray assembly as defined in claim 1. The optical fiber tray assembly is discriminated over the prior art GB 2 312 053 A by the features defined in the characterizing clause of claim 1.

In particular, an organizer tray has been proposed which allows an organization of an increased number of optical fibre elements within the organizer tray without remarkably increasing the diameter of the organizer tray. The novel concept is based on the fact that the tray assembly comprises a lower tray and an upper tray each comprising hinge means which cooperate with each other for pivotably connecting both trays with each other. Further, the lower tray provides a guiding channel introducing an optical fibre element into the thus formed optical fibre tray assembly, wherein the introduced optical fibre element is guided from the lower tray toward the upper tray to be organized in the organizing area of the upper tray.

Based on the above novel concept, it is an object of the present invention to provide a further optimized optical fibre tray assembly which allows at least an improved handling of the optical fibre tray assembly and of the optical fibre elements introduced therein and which optical fibre tray assembly provides a reduced transient loss for the organized optical fibre elements.

The above object is solved by an optical fibre tray assembly according to claim 1. The inventive optical fibre tray assembly provides specifically a lower tray comprising lower hinge means and an upper tray comprising upper hinge means, wherein the lower and upper hinge means cooperate with each other for pivotably connecting both trays with each other. Preferably, the lower hinge means is formed at opposing longitudinal end sides of at least two lower guiding channels provided with the lower tray, wherein said at least two lower guiding channels partially surround the lower organizing area and wherein each lower guiding channel is provided at a lateral area of the lower support plate for guiding therein at least one further optical fibre element which is preferably received by the lower guiding channel at one longitudinal end side thereof. Furthermore, the upper hinge means provide a connection path for guiding at least one further optical fibre element received by the lower tray toward the upper tray thereof, i.e. toward the upper tray not receiving the at least one further optical fibre element. Preferably, the upper hinge means provide the connection path at least between the lower guiding channel and an upper organizing area provided with the upper tray. Particularly, in the preferred embodiment, the connection path is provided between one lower guiding channel and the upper organizing area and between the other lower guiding channel and the upper organizing area. The optical fibre tray assembly may preferably provide connection paths separated at least partially from each other. In other words, the separated connection paths may preferably provide connection channels, which are further preferably accessible from a front surface side of the upper tray, and which cross each other, thereby forming a common connection channel section. In said common connection section, optical fibre elements guided thereby will cross each other by an overlap of one optical fibre element on the other that is the overlapping optical fibre elements come in contact with each other. Alternatively, the connection channel may be adapted to guide the optical fibre elements contactlessly, even though they cross each other. Notwithstanding, for the purpose of simple construction, the optical fibre tray assembly may preferably provide a plate-shaped support on which the optical fibre element may be guided from the lower guiding channel to the organizing area, wherein an overlapping of optical fibre elements crossing each other and coming into contact with each other is allowed. The connection path may be used for guiding the optical fibre element toward the upper tray and also from the upper tray toward the lower tray, preferably toward the lower guiding channel. Accordingly, the present invention is not to be construed to be limited to a connection path allowing a guiding of the at least one further optical fibre element only in one direction. Moreover, even though only one optical fibre element may be introduced into the optical fibre tray assembly and may be guided to an outside thereof, the one optical fibre element is considered as two single optical fibre elements in sections at which the optical fibre element will cross itself. Further particularly, the hinge formed by the lower hinge means and the upper hinge means may guide two optical fibre elements preferably from the lower guiding channel to the upper tray even though only one optical fibre element is introduced into the optical fibre tray assembly.

Based on the configuration as defined in claim 1, the optical fibre tray assembly may be reduced in size as a bypass channel may be omitted, which bypass channel is usually provided for guiding the optical fibre element adjacent to the hinge connecting the lower tray with the upper tray. Alternatively, the gained space may be used for the organizing area provided with the lower tray. Furthermore, the design in particular of the lower tray may be further simplified as different sections with different functions are combined with each other.

Preferred embodiments of the inventive optical fibre tray assembly are subject to the dependent claims.

Further technical effects and objects of the present invention are derivable from the following detailed description of a preferred embodiment depicted in the accompanying drawings. In these drawings:
- Figure 1: shows a perspective top view of a closed optical fibre tray assembly according to the present invention;
- Figure 2: shows a perspective top view of an opened optical fibre tray assembly as shown in Figure 1:
- Figure 3: shows an enlarged perspective side view of a handle element and a handling recess provided with the optical fibre tray assembly as shown in Figures 1 and 2;
- Figure 4: shows a perspective top view of a lower rear surface side of an upper tray provided with the optical fibre tray assembly as shown in Figures 1 and 2;
- Figure 5: shows an enlarged perspective top view of lower and upper hinge means in an open state of the optical fibre tray assembly as shown in Figure 4;
- Figure 6A: shows an enlarged perspective top view of the lower and upper hinge means of the optical fibre tray assembly as shown in Figure 1;
- Figure 6B: shows an enlarged perspective top view of one connection side of the upper hinge means received within the lower hinge means;
- Figure 7A: shows an enlarged perspective top view of the lower and upper hinge means of the optical fibre tray assembly according to a further embodiment of the present invention;
- Figure 7B: shows an enlarged perspective top view of one connection side of the upper hinge means received within the lower hinge means of the optical fibre tray assembly shown in Figure 7A;
- Figure 8A: shows a perspective cross-sectional view along intersection line VIIIA-VIIIA of the optical fibre tray assembly as shown in Figure 1;
- Figure 8B: shows an enlarged cross-sectional side view of an upper and lower splice holding area of the optical fibre tray assembly as shown in Figure 8A; and
- Figure 9: shows a cross-sectional side view along intersection line IX-IX of the optical fibre tray assembly as shown in Figure 1.

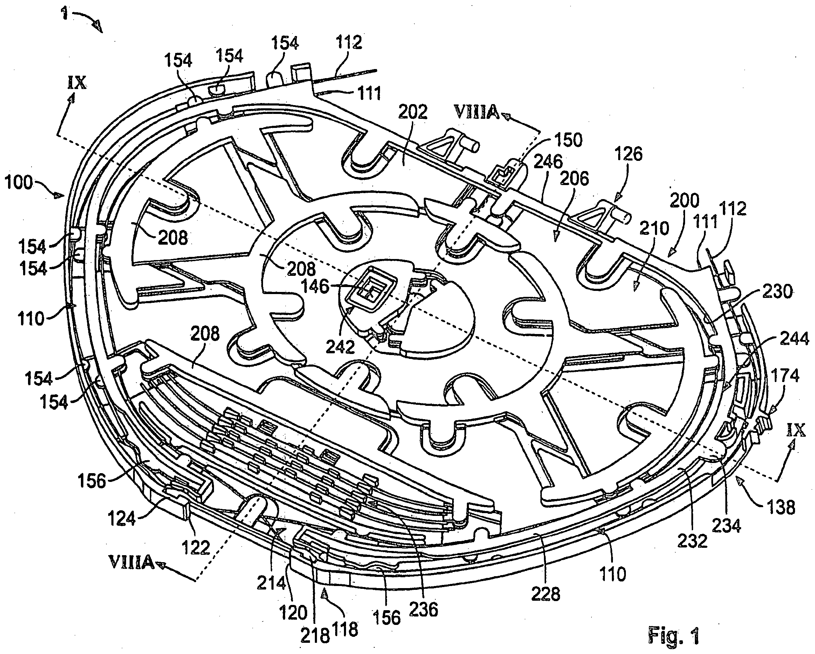

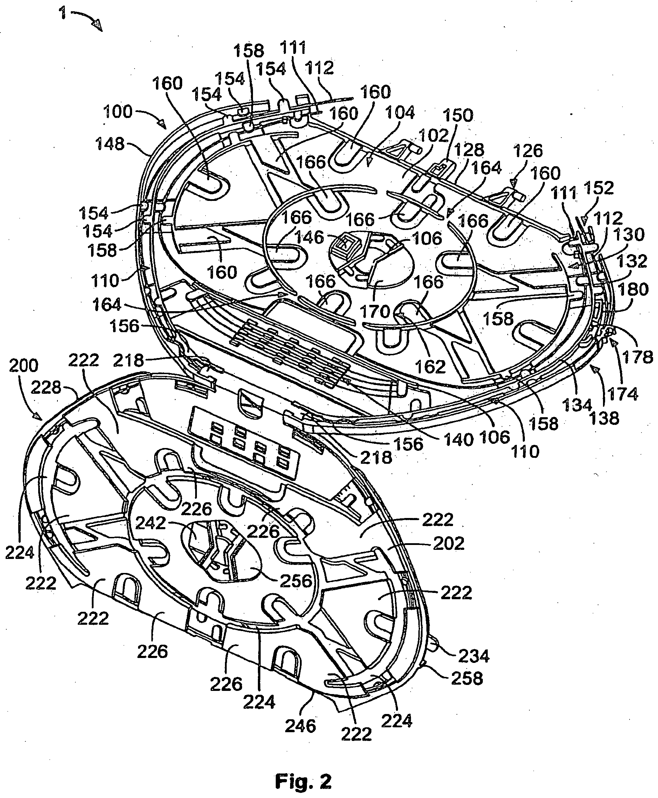

Figure 1 shows a perspective top view of a closed optical fibre tray assembly 1 according to a preferred embodiment of the present invention. The optical fibre tray assembly 1 comprises a lower tray 100 and an upper tray 200 covering the lower tray 100, thereby forming the closed state of the optical fibre tray assembly 1. Figure 2 shows a perspective top view of the optical fibre tray assembly 1 in an opened state thereof, wherein the upper tray 200 is pivoted relative to the lower tray 100.

The optical fibre tray assembly 1 comprises a lower tray 100 and an upper tray 200, each tray is substantially of a disc-like shape, wherein the lower tray 100 has a larger diameter than the upper tray 200. The lower and upper trays 100, 200 may preferably have a similar diameter. The upper tray 200 is embedded on a lower front surface side 104 of the lower tray 100 such that an upper free end side of a lower outer rim 148 of the lower tray 100 forms with at least some upper free end sides of upper wall portions 208 projecting the upper surface side 206 a common surface for the optical fibre tray assembly 1. Thus, the upper free end sides of the lower outer rim 148 and of the upper wall portions 208 provide support surfaces, respectively, for a cover attachable to the front surface side of the tray assembly 1 for at least partially covering said front surface side.

The lower tray 100 and the upper tray 200 provide substantially a similar surface profile on their respective front surface sides 104, 206. Accordingly, a configuration and effects derivable for sections provided with the lower tray 100 and described in detail in the following, will also apply to respective sections of the upper tray 200 which respective upper tray sections will provide similar functions as the described lower tray sections.

The lower tray 100 has a lower support plate 102 projected on the lower front surface side 104 thereof by a plurality of lower wall portions 106, which forms a lower organizing area 108 for organizing therein at least one optical fibre element 111 introduced into the optical fibre tray assembly 1. The disc-like shaped lower support plate 102 provides a straight-line lower connection lateral end side 128, the longitudinal end sides of which are continuous with a plurality of essentially curved portions provided with the lower outer rim 148 and terminating at a lower lateral end side 127 opposing the lower connection lateral end side 128 in a second straight-line lateral end side. The lower connection lateral end side 128 and the opposed lower lateral end side 127 extend essentially parallel to each other, wherein the opposed lower lateral end side is shorter than the lower connection lateral end side 128. The lower connection lateral end side 128, the lower outer rim 148 and the opposed lower lateral end side 127 define the disc-like lower support plate 102.

The lower connection lateral end side 128 is projected laterally by a pair of hinge-base elements 126. That is, the hinge-base elements 126 protrude from said lower connection lateral end side 128 in a direction opposing the lower organizing area 108. Said hinge base elements 126 are essentially L-shaped, wherein the short leg projects from the lower connection lateral end side perpendicularly 128 thereto and provides a pin portion adapted to be received by associated receiving openings provided with a support for pivotably supporting the optical fibre tray assembly 1. Even though said pin portions are shown in Figures 1 and 2 as protruding in a similar direction, said pins may protrude in opposing directions, respectively. Said pair of hinge base elements 126 provides a base hinge for the optical fibre tray assembly 1. In other words, the lower tray 100 and the upper tray 200 are hingeable together by means of said pair of hinge base elements 126. Between said pair of hinge base elements 126, a stop pin 150 is arranged which protrudes from the lower connection lateral end side 128 in parallel to the pair of hinge base elements 126. Said stop pin 150 may cooperate with a stop pin abutment provided with the support forming the receiving openings for stopping a rotary movement of the optical fibre tray assembly 1 around a rotary axis formed by the hinge base elements 126. The stop pin 150 may be likewise provided outside the pair of hinge base elements 126. Alternatively, more than one stop pin 150 may be disposed along the lower connection lateral end side 128.

At each longitudinal end side of the lower connection lateral end side 128, a lower entrance 152 to the lower front surface side 104 is provided. The lower entrance 152 is adapted to receive the plurality of optical fibre elements 111, 112 transversely with respect to a longitudinal extension of the lower connection lateral end side 128. Particularly, the lower entrance 152 is defined at a peripheral side of the lower support plate 102 by the lower outer rim 148. The lower entrance 152 is separated by a lower separating wall portion 132 into a lower outer entrance and a lower inner entrance. In this context, an outer and inner direction is considered with respect to a centre point of the optical fibre tray assembly 1. Thus, an inner part, i.e. the lower inner entrance is provided nearer to the centre point of the optical fibre tray assembly 1 than an outer part, i.e. the lower outer entrance. The lower separating wall portion 132 extends from said lower entrance 152 essentially parallel to the lower outer rim 148 toward the lower lateral end side 127 opposing the lower connection lateral end side 128. Thereby, a lower guiding channel 110 is formed between the lower outer rim 148 and the lower separating portion 132. The lower guiding channel 110 is accessible when the lower tray 100 is covered by the upper tray 200. Particularly, in the covered state of the lower tray 100, the lower guiding channel 110 is accessible from the front surface side of the optical fibre tray assembly 1 projected by a plurality of lower guiding channel holding ribs 154 for holding the at least one further optical fibre element 112 received by the outer entrance therein. Particularly, a single lower guiding channel holding rib 154 is provided shortly behind the lower outer entrance with respect to the extension direction of the lower guiding channel 110, which single lower guiding channel holding rib 154 is followed by three pairs of further lower guiding channel holding ribs 154. Said single lower guiding channel holding rib 154 and one of the pairs of lower guiding channel holding ribs 154 are supported by the lower separating wall portion 132. The other one of the pairs of lower guiding channel holding ribs 154 is supported by the lower outer rim 148. The single lower guiding channel holding rib 154 at the lower entrance side completely projects from the lower guiding channel 110, and cooperates with a recess portion provided in said lower outer rim 148 in order to introduce the at least one further optical fibre element 112 from the lower front surface side 104. The three pairs of lower guiding channel holding ribs 154 partially project from the lower guiding channel 110. Furthermore, along the extension direction of the lower guiding channel 110, the lower guiding channel holding ribs 154 forming one pair overlap with each other so as to provide a space, i.e. a slit therebetween through which the optical fibre element 111 may be introduced from the lower front surface side 104. The lower guiding channel 110 terminates in lower hinge means 118 which are formed by a bushing 124 having a C-cross section adapted to snappingly receive upper hinge means 212 provided with the upper tray 200.

The lower outer rim 148 and the lower separating wall portion 132 further provide between the bushing 124 and a near thereto pair of lower guiding channel holding ribs 154 a pair of lower longitudinal guiding channel holding ribs 156 which oppose each other and which provide a slit therebetween, which slit has a curved shape, preferably a wavelike shape, and which extends along the extension direction of the lower guiding channel 110. Said lower longitudinal guiding channel holding ribs 156 partially cover the lower guiding channel 110 in the extension direction thereof by a certain length in order to reliably prevent a coming out of the at least one further optical fibre cable 112 to be received within said lower guiding channel 110.

As further shown in Figure 1, an outer shape of the lower support plate 102 is essentially symmetrical with respect to a centre line extending perpendicular to the lower connection lateral end side 128 and to the lateral end side 127. As the guiding channel 110 terminates distant from said centre line, opposing longitudinal end sides 120, 122 of the lower guiding channels 110 are provided distant from each other. The thus formed space between said opposing longitudinal end sides 120, 122 is adapted to pivotably accommodate the upper hinge means 212 which projects said space and each lower guiding channel 110 to be received by the bushing 124 at each opposing longitudinal end side 120, 122 of the lower guiding channels 110.

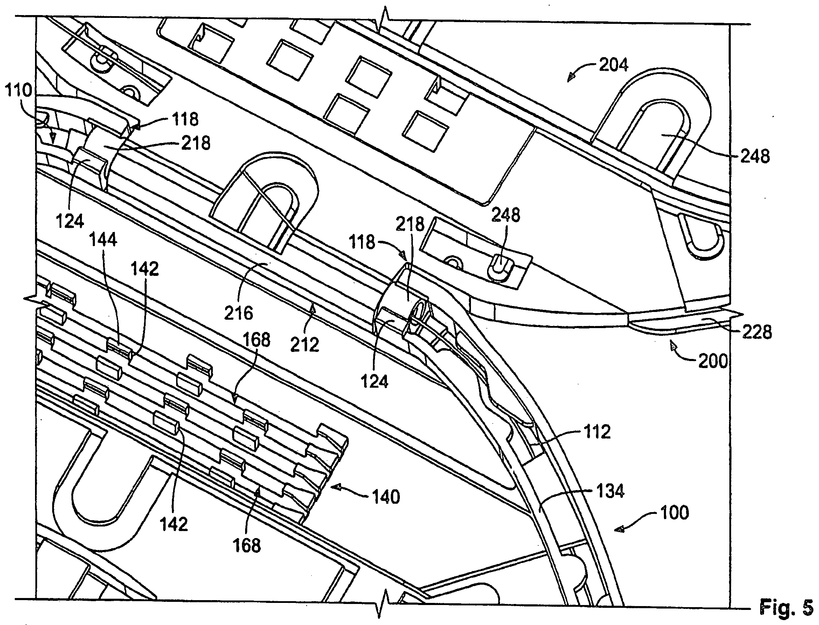

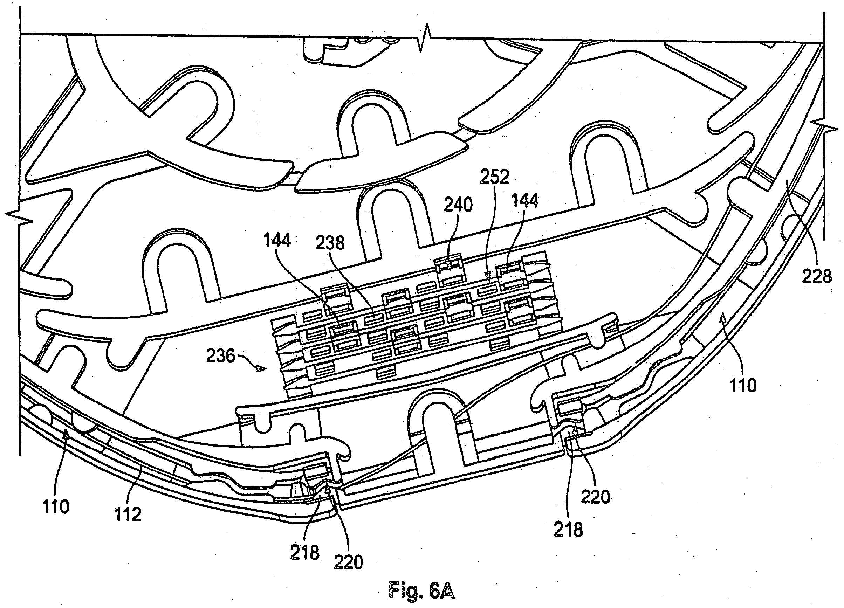

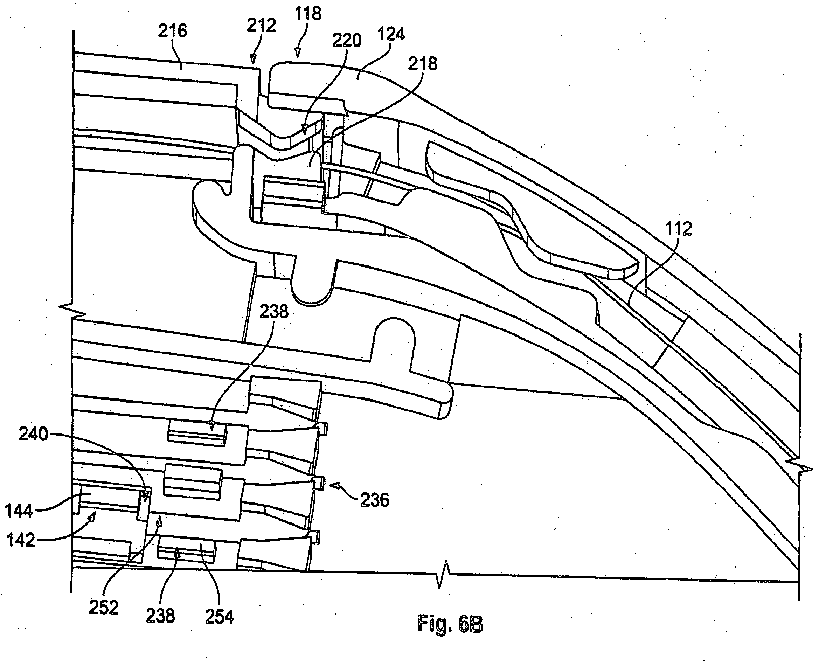

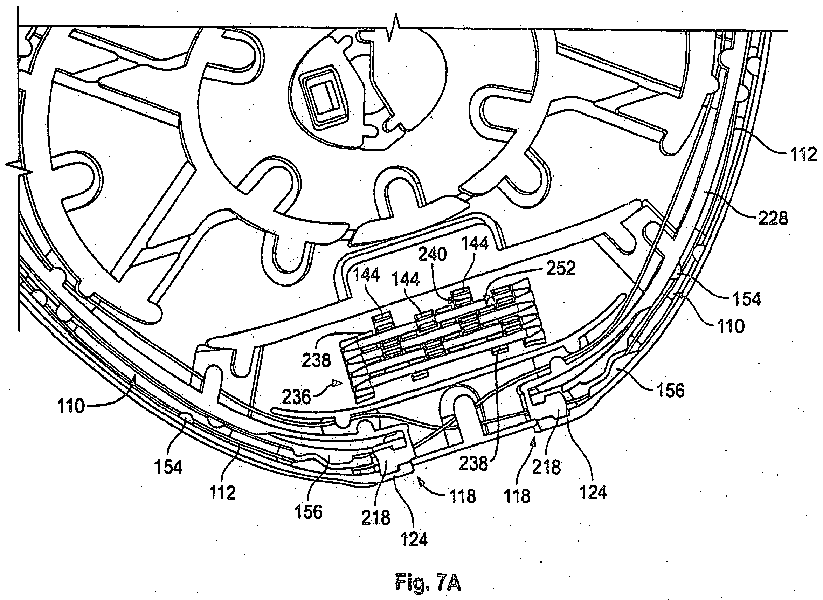

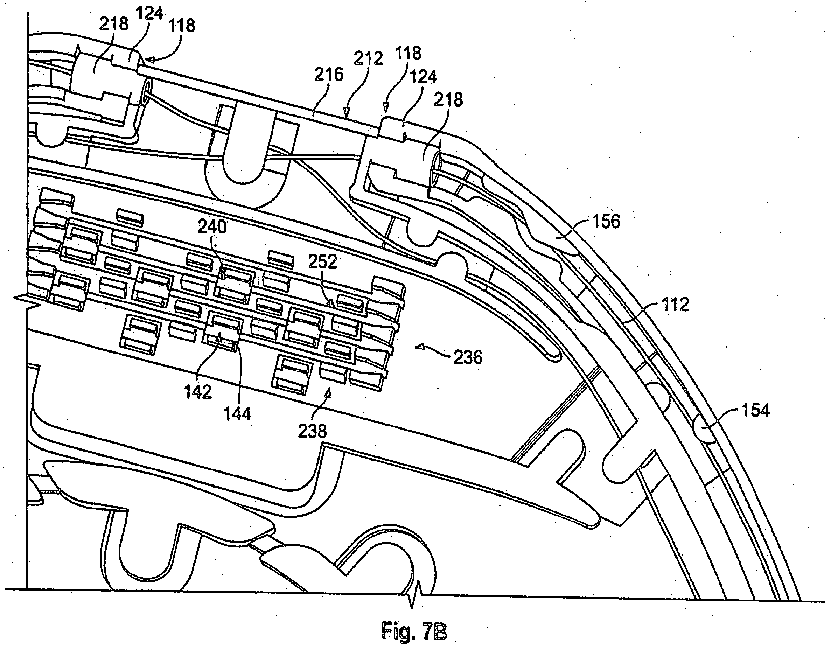

Figures 5 to 7B show an enlarged perspective top view of the lower hinge means 118 receiving the upper hinge means 212. As particularly shown in said Figures 5, 68 and 7B, the cross-sectionally C-shaped bushing 124 receives the upper hinge means 212 which is hammer-head-shaped, wherein longitudinal end sides of the head 216 are formed as axle elements 218 which are received within the bushing 124 of the lower tray 100. The at least one optical fibre element 112 is guided through the axial elements 218 to be introduced onto the upper tray 200. Particularly, the axle elements 218 are formed of a hollow shaft for guiding the at least one further optical fibre element 112 therethrough (see Figures 7A and 7B). Additionally, according to a further preferred embodiment as shown in Figures 6A and 6B, the axle elements 218 are provided with a longitudinal slit 220 extending along an articulation direction of the hinge formed by the lower hinge means 118 and the upper hinge means 212. The articulation direction of the hinge extends parallel to an articulation direction provided by the hinge base elements 126. Moreover, said articulation directions are essentially parallel to the lower connection lateral end side 128 and the lateral end side 127.

The bushing 124 is adapted to snappingly receive the axial elements 218 (Figures 6A to 7B), wherein the slit 220 and an opening of the C-shaped bushing 224 are in alignment with each other, when the lower tray 100 is covered by the upper tray 200. Accordingly, the hinge formed by the lower hinge means 118 and the upper hinge means 212 forms a connection path 214 between the lower guiding channels 110, through which the at least one optical fibre element 112 may be guided from one lower guiding channel 110 to the other lower guiding channel 110.

As further shown in Figures 1 and 2, the lower wall portions 106 projecting from the lower front surface side 104 as well as upper wall portions 208 projecting from the upper front surface side 206 of the upper tray 200 are formed generally with a specific curvature, which curvature has a radius larger than the critical bend radius of the optical fibre element to be organized in the optical fibre tray assembly 1. Thereby, it is prevented that the optical fibre element to be organized in the optical fibre tray assembly 1 is bent by a radius smaller than the critical bend radius, to prevent damage of the optical fibre element by e.g. occurrence of a kink or the like, which would adversely affect signal transmission through the optical fibre element.

As further shown particularly in Figure 2, an inner lower guiding channel 130 is formed between the lower separating wall portion 132 and a thereto opposed lower wall portion 106 partially extending in parallel to said lower separating wall portion 132. More particularly, the inner lower guiding channel 130 extends adjacent to the lower guiding channel 110 and is separated therefrom by the lower separating wall portion 132. The inner lower guiding channel 130 is particularly provided for guiding at least one optical fibre element 111 received at the inner entrance of the lower entrance 152. Two pairs of inner lower guiding channel holding ribs 158 supported by the lower separating wall portion 132 and the lower wall portion 106 support, respectively project from the inner lower guiding channel 130. One pair of the inner lower guiding channel holding ribs 158 is arranged at a longitudinal end side of the inner lower guiding channel 130, which longitudinal end side is distant from the inner lower entrance. The other pair is arranged at the other longitudinal end side of said inner lower guiding channel 130. The inner lower guiding channel 130 is open at its longitudinal end side to the lower organizing area 108 to guide the at least one optical fibre element 111 toward the lower organizing area 108 and to receive at least one optical fibre element 111 from the lower organizing area 108. According thereto, the inner lower guiding channel 130 may be used for looping the at least one optical fibre element 111 in the lower tray 100.

The lower wall portion 106 which defines the inner lower guiding channel 130 further supports three lower organizing area holding ribs 160 partially projecting from the lower organizing area 108. Three lower organizing area holding ribs 160 supported by the lower wall portion 106 projecting from the lower connection lateral end side 128 project from the organizing area 108. The lower organizing area holding ribs 160 are generally distributed along the lower wall portion 106 in order to reliably hold the optical fibre element 111 looped in the lower organizing area 108. Particularly, the lower organizing area holding ribs 160 are distributed in a similar manner to the lower inner guiding channel ribs 158 or the lower guiding channel holding ribs 154. That is, the inner lower guiding channel holding ribs 160 are preferably distributed pairwise along the lower organizing area 108 in which the at least one optical fibre element 111 may be organized, preferably looped.

As can be further seen in Figure 2, a plurality of lower support wall portions 106 surrounding a centre of the lower organizing area 108 basically circularly project from the lower support plate 102. Thereby, an inner lower organizing area 162 is formed, in which the optical fibre element 111 introduced into the optical fibre tray assembly 1 by lower entrance 152 may be looped. The inner lower wall portions 106 forming the inner lower organizing area 162 support a plurality of lower organizing area holding ribs 160 which partially project from the inner lower organizing area 162 and the lower organizing area 108. The lower organizing area holding ribs 160 projecting from the lower organizing area 108 cooperate with the lower organizing area holding ribs 160 provided with the lower wall portion 106 forming the inner lower guiding channel 130 so as to form a pair of lower organizing area holding ribs 160 providing a longitudinal slit between opposing longitudinal end faces thereof. Said longitudinal slit extends transverse to side surfaces of the lower wall portions 106, which side surfaces form an abutment surface for the at least one optical fibre element 111. Thereby, even though the optical fibre tray assembly 1 may be urged to vibrate or the like, the optical fibre element 111 introduced into the optical fibre tray assembly 1 will not simply come out of the lower organizing area 108 as the slit forming an opening for inserting the optical fibre element 111 from the lower front surface side 104 extends misaligned to the way of guiding the optical fibre element 111 in the lower tray 100.

The lower wall portions 106 forming the inner lower organizing area 162 provide in opposing directions to the lower connection lateral end side 128 and to the lateral end side 127, two pairs of two inner lower organizing area entrances 164 through which the at least one optical fibre element 111 may be introduced into the inner lower organizing area 162. At a centre portion of the inner lower organizing area 162, an X-shaped optical fibre element guiding channel is provided, which is formed by two opposing lower wall portions 106, which are spaced at their longitudinal end sides from each other by a distance larger than a distance at a middle of the X-shaped optical fibre element guiding channel. A pair of holding ribs opposing each other and supported by the lower wall portions 106, respectively, project from said X-shaped optical fibre element guiding channel at its longitudinal end sides.

Based on the configuration of the lower wall portions 106 cooperating with the plurality of holding ribs 158, 160 and 166, the at least one optical fibre element 111 may be looped, i.e. organized, within the lower organizing area 108 and the inner lower organizing area 162 in a plurality of ways. Particularly, as shown in Figure 2, the at least one optical fibre element 111 may be looped from the inner lower entrance through the inner lower guiding channel 130 directly toward the opposing inner lower guiding channel 130 formed at the other lateral side of the lower tray 100 and leaving the lower tray 100 through the respective lower entrance 152. Alternatively, instead of leaving the lower tray 100, the at least one optical fibre element 111 may be guided along the lower wall portion 106 forming the lower connection lateral end side 128. This way of guiding the at least one optical fibre element 111 provides a loop having the largest diameter.

A further loop with a smaller loop diameter may be formed by inserting the at least one optical fibre element 111, guiding said at least one optical fibre element 111 through the inner lower guiding channel 130, introducing said at least one optical fibre element 111 through the inner lower organizing area entrance 164 to the inner lower organizing area 162, and guiding said at least one optical fibre element 111 inside the inner lower organizing area 162 along the lower wall portion 106 defining said inner lower organizing area 162. The at least one optical fibre element 111 may leave the inner lower organizing area 162 at another inner lower organizing area entrance 164 to be then guided again in the inner lower guiding channel 130 or along the lower wall portion 106 forming the inner lower guiding channel 130. Another loop may be obtained by guiding the at least one optical fibre element 111 inside the inner lower organizing area 162 through the X-shaped guiding channel instead of along the lower wall portion 106.

Based on the arrangement of the lower wall portions 106 and the lower separating wall portion 132, a technician has several possibilities for organizing the at least one optical fibre element 111 within the lower organizing area 108 and/or within the inner lower organizing area 162. Hence, the inventive optical fibre tray assembly 1 provides a high degree of freedom for organizing the at least one optical fibre element 111 introduced by the lower entrance 152 into the optical fibre tray assembly.

The lower tray 100 further provides between the lateral end side including the bushing 124 and the lower organizing area 108, a lower splice holder organizing section 140 for organizing therein a plurality of lower splices 172 formed between at least two optical fibre elements 111. Particularly, the optical fibre elements 111 may be directly introduced into the lower splice holder organizing section 140 through the lower entrance 152 and the lower guiding channel 130. Alternatively, the at least one optical fibre element 111 may be looped beforehand by guiding the at least one optical fibre element 111 into the lower organizing area 108 and/or the inner lower organizing area 162. Said lower organizing splice holder section 140 provides at its longitudinal end sides a pair of holding ribs for holding the introduced optical fibre elements 111. Said pair of holding ribs is arranged and formed as described above. Generally, the holding ribs of the lower tray 100 and likewise of the upper tray 200 provide a rounded shape. However, for obtaining a longitudinal slit between opposing holding ribs, the holding rib may adopt any other shape, such as a rectangular or triangular shape as particularly shown in Figures 1 and 2.

The lower splice holder organizing section 140 provides a plurality of parallel splice grooves 168 extending parallel to the lower wall portion 106 separating the lower splice holder organizing section 140 from the lower organizing area 108. The lower splice grooves 168 are adapted to receive lower splices 172 and to secure them preferably by way of clamping. However, the lower splice holder organizing section 140 may be provided with splice holders commonly known in the technical field of fibre splicing. Thus, the present invention is not to be construed to be limited to the kind of lower splice holder organizing section 140 shown in the accompanying drawings.

The specific configuration of the lower splice holder organizing section 140 and of an upper splice holder organizing section 236 will be described in the following with respect to Figures 5 to 8B.

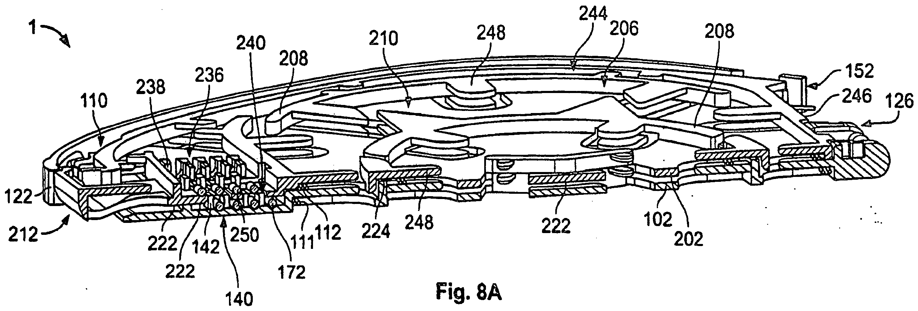

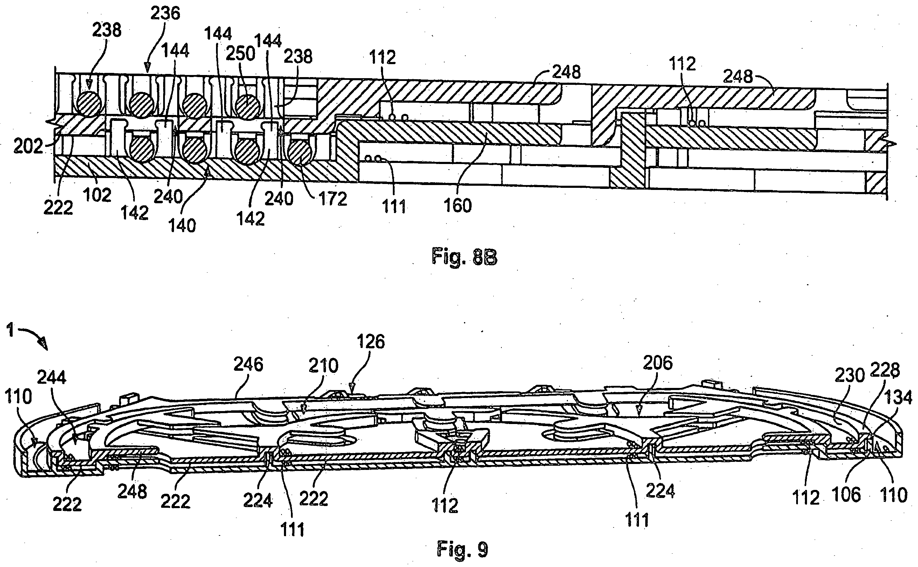

Particularly, Figure 8B shows an enlarged cross-sectional view of the section including the lower and upper splice holder organizing sections 140 and 236. The lower and upper splice holder organizing sections 140, 236 are basically similarly shaped. Particularly, said lower and upper splice holder organizing sections 140, 236 comprise plural lower and upper latch means 142, 238, respectively, which are adapted to receive one optical fibre element, particularly lower and upper splices 172, 250, which splices connect at least two optical fibre elements 111, 112, wherein said optical fibre elements 111, 112 are received in a direction essentially parallel to the articulation direction. The upper latch means 238 are provided above the lower latch means 142 when the lower tray 100 is covered by the upper tray 200. Furthermore, selected lower latch means 142 are provided with elevated latch sections 144 projecting from the covering rear surface section 222 (Figures 6A, 6B, 7B and 8B). The upper rear surface side 204 is provided with latch recesses 240 in which the elevated latch sections 144 are received when the lower tray 100 is covered by the upper tray 100. Accordingly, the lower splice holder organizing section 140 provides sufficient height projecting from the lower front surface side 104 for receiving and securing lower splice 172 therein. Particularly, the elevated latch sections 144 project laterally from the lower splice groove 168, thereby forming a receiving opening at a free end side of the elevated latch sections 144 smaller than a maximum diameter of the associated lower splice groove 168. Hence, a releasing of the lower splice 172 received within the respective lower splice groove 168 may be reliably prevented in an uncovered state of the lower tray 100. The upper latch means 238 provide a shape substantially similar to the lower latch means 142. Particularly, the upper latch means 238 may also comprise upper latch section 254 projecting laterally from the upper splice groove 252 and are provided at a sufficient projection height with respect to the upper surface side 206 for receiving and securing the upper splice 250 therein. The lower latch means 142 are arranged in the lower splice groove direction 19 alternately with respect to a lower latch means 142 provided in the directly adjacent lower splice groove 168 (Figure 5). Said arrangement of latch means also applies for the upper splice holder organizing section 236. According to said configuration, the upper splice holder organizing section 236 can be formed with a compact size, i.e. a plurality of splice grooves can be provided with a small size.

In this context, even though the lower tray 100 and the upper tray 200 are comprised of splice holder organizing sections 140, 236, either the lower tray 100 and/or the upper tray 200 may be provided only with an organizing area for storing a looped optical fibre element. Accordingly, it is feasible that the lower tray 100 may provide the possibility of organizing splices formed between at least two optical fibre elements, whereas the upper tray 200 is used as a storage tray, not comprising a splice holder organizing section. Other organizing functions for the lower tray 100 and the upper tray 200 are likewise thinkable.

As further shown in Figure 2, the lower tray 100 comprises a lower cover stem receiving opening 146, which is provided outside the X-shaped guiding channel and adjacent to the small spaced section of said X-shaped guiding channel. The lower cover stem receiving opening 146 is associated with a snapping means adapted to reliably hold a cover stem projecting from a cover (not shown) for the optical fibre tray assembly 1. Thus, the cover may be simply secured against the optical fibre tray assembly 1 from a front surface side of the optical fibre tray assembly 1, which front surface side corresponds to a lower front surface side 104 and the upper front surface side 206, respectively.

The lower tray 100 further provides a support 170 for a Radial Frequency Identification (RFID-) tag. Said RFID-tag support 170 is provided opposed to the lower cover receiving opening 146 outside the lower-X-shaped guiding channel. Generally, the lower cover receiving opening 146 and the RFID-tag 170 may be provided at positions which are not required to be used for organizing the optical fibre element. As commonly known, RFID refers to a system for reading out data wirelessly, that is the data may be read out without providing a wire link between an RFID-tag provided with a chip for storing specific data, and an associated receiver (reader). Thus, data stored in the RFID-tag provided within a housing can be read out simply without the necessity of opening the housing. Accordingly, by providing such an RFID-tag with the optical fibre tray assembly, specific data concerning for instance a type of signal transmitted by the optical fibre tray assembly from e.g. a provider side to a customer side, a provider identification, a customer identification, kind of optical fibre elements used or the like may be stored with said RFID-tag, which can be simply read out without disassembling the optical fibre tray assembly. Thus, in case a specific provider cable shall be spliced with a specific customer connection line, the technician may simply identify the optical fibre tray assembly accommodating the respective cables without opening a plurality of tray assemblies. Hence, identification of the fibre tray assembly to be operated is simplified. The RFID-tag support 170 is covered by an upper RFID-tag support cover 256 provided with the upper tray 200 at an associated position.

The upper tray 200 has a plurality of upper wall portions 208 projecting from the upper front surface side 206, wherein said upper wall portions 208 provide an upper free end side larger than upper free end sides 134 of the lower support wall portions 106, as said respective upper free end sides provide abutment surfaces on the upper rear surface side 204 for the associated upper free end sides 134 in order to embed the upper tray 200 on the lower tray 100.

As described above, the upper tray 200 provides substantially a surface profile on the upper surface side 206 similar to a surface profile of the lower front surface side 104. The exceptions are that the upper tray 200 does not comprise an entrance at the connection lateral end side 128, as the at least one further optical fibre element 112 is guided through the lower guiding channel 110 and introduced in the upper tray 200 through the connection path 214. Accordingly, the upper tray 200 only comprises an upper guiding channel 244 at a periphery of the upper tray 200 (Figure 1), wherein said upper guiding channel 244 is shaped similarly to the inner lower guiding channel 130.

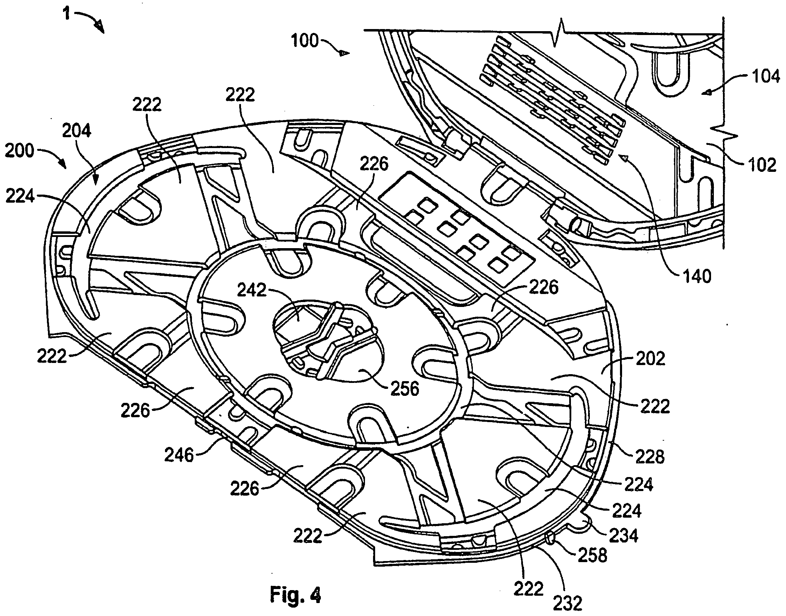

Figure 4 shows a perspective view of the upper rear surface side 204. Particularly, the upper rear surface side 204 provides a lower rear surface plane comprising covering rear surface sections 222 which are provided for covering the at least one optical fibre element 111 received within the lower organizing area 108. The upper rear surface side 204 further provides an upper rear surface plane which comprises support rear surface sections 224 provided for abutting against the upper free end sides 134 of the plurality of lower wall portions 106 (Figure 2). Thus, said support rear surface sections 224 denote the deepest surfaces on the upper rear surface side 204 (Figure 4).

In addition, the upper rear surface side 204 provides an intermediate rear surface plane which is arranged between the lower rear surface plane 222 and the upper rear surface plane 224. The intermediate rear surface plane comprises at least one intermediate rear surface section 226 which covers a section of the lower front surface side 204 adapted to receive overlapping optical fibre elements 111. Particularly, as shown in Figure 4, the upper rear surface side 204 comprises four intermediate rear surface sections 226. Two intermediate surface sections 226 are provided at the upper lateral end side 246, whereas the other two intermediate rear surface sections 226 are provided adjacent to the upper wall portion 208 separating the upper splice holder organizing section 236 from the upper organizing area 210. Further particularly, said intermediate rear surface sections 226 are provided at regions provided for covering an outside of the inner lower organizing area entrances 164, through which the at least one optical fibre element 111 may be guided between the lower organizing area 108 and the inner lower organizing area 162. In other words, when the lower tray 100 is covered by the upper tray 200, each intermediate rear surface section 226 covers a specific section of the lower organizing area 108, which section is outside the inner lower organizing area 162 and adjacent the inner lower organizing area entrance 164, wherein, in the covered state of the lower tray 100, a distance between the intermediate rear surface section 226 and the lower front surface side 104 is larger than a distance between the covering rear surface sections 222 and the lower front surface side 104.

Based on the configuration of said intermediate rear surface plane, the sections of the lower tray 100 covered by said intermediate rear surface sections 226 provide a larger height in a covered state of the lower tray 100 than the remaining sections covered by the rear surface sections 222. As more height is provided for said respective sections, particularly for the sections in which overlapping of a plurality of optical fibre elements 111 may occur, transient loss can be reduced as an interference of said overlapped optical fibre elements 111 due to small height can be prevented. Preferably, the intermediate rear surface sections 226 are formed by the process of manufacturing the upper tray 200, which may be produced by injection moulding of plastic material as well as the inner tray 100.

Additionally, the upper tray 200 provides upper rims 228 for abutting against upper free end sides 134 of the plurality of lower wall portions 106, wherein the upper abutment rims 228 laterally project from the upper wall sections 230 of the upper wall portions 208 arranged at a lateral area of the upper support plate 202. According thereto, a reliable support of the upper tray 200 at its peripheral side can be achieved.

As further shown in Figures 1 to 4, the upper tray 200 comprises a handle element 234, which laterally projects from the outer upper wall section 232 and which is in alignment with the handling recess 138 provided with the lower tray 100 when the lower tray 100 is covered by the upper tray 200. By means of said handle element 134, the upper tray 200 may be simply pivoted without interfering with the optical fibre elements 111, 112 arranged on the lower tray 100 and the upper tray 200, respectively.

The upper tray 200 further comprises an upper cover stem receiving opening 242 which is in alignment with the lower cover stem receiving opening 146 when the lower tray 100 is covered by the upper tray 200. As the lower cover stem receiving opening 146 is associated with the snapping means, in the covered state of the lower tray 100 by the upper tray 200, the cover may cover the upper front surface side 206, wherein the cover is only secured against the optical fibre tray assembly by the lower tray 100.

As can be particularly seen in Figures 1 and 2, the lower cover stem receiving opening 146 is formed by a lower wall portion frame 147 projecting from the front surface side 104 with a rectangular outer shape. In the covered state of the lower tray 100 by the upper tray 200, the lower wall portion frame 147 is received by the upper cover stem receiving opening 242, wherein the lower cover stem receiving opening 146 is accessible from the upper front surface side 206. The lower wall portion frame 147 and the upper cover stem receiving opening 242 may be configured so as to provide a form fit or a press fit therebetween, when the lower tray 100 is covered by the upper tray 200. According to such a preferred configuration, the upper tray 200 may be simply and releasably secured against the lower tray 100.

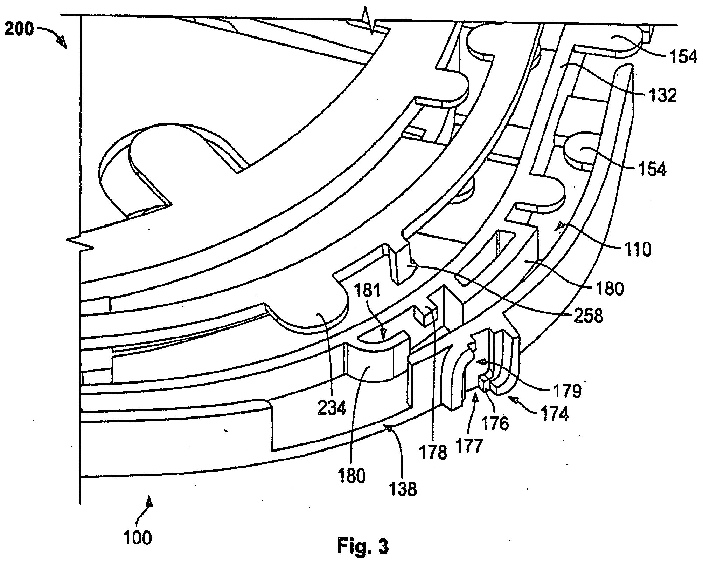

Alternatively or in addition thereto, as shown in Figure 3, the upper tray 200 comprises an upper snapping means 258 arranged at a circumferential end side of the upper support plate 202 and projecting from the upper rear surface side 204, while the lower tray 100 comprises a thereto associated lower snapping means 178 protruding from a side surface of the lower separating wall portion 132 within the lower guiding channel 110 and being engageable on the lower front surface side 104 at least from a direction perpendicular thereto. The lower snapping means 178 is received within a lower chamber 181 formed within the lower guiding channel 110 by two lower guiding channel wall portions 180 sandwiching the snapping means 178 in the longitudinal direction of the lower guiding channel 110 so as to bypass the at least one optical fibre element 112 outside the lower chamber 181. Based on the lower and upper snapping means 178, 258, the upper tray 200 can be easily secured against the lower tray 100 covered by the upper tray 200.

Moreover, the upper and lower snapping means 258, 174 are provided proximate the handle element 234 and the handling recess 138, respectively, in order to decrease a releasing force necessary for releasing the upper tray 200 secured against the lower tray 100 by means of the upper and lower snapping means 258, 178.

As further shown in Figure 3, the lower tray 100 comprises a lower fixation means 174 laterally projecting from a circumferential outer end face of the lower support plate 102. The lower fixation means 174 has a pair of lower interlocks 176 adapted to provide a positive locking in a direction perpendicular to the lower front surface side 104. The pair of interlocks 174 is arranged opposing each other, thereby forming a lower interlock channel 177 therebetween. The lower interlock channel 177 is accessible from the direction perpendicular to the lower front surface side 104 and/or from the circumferential side of the lower support plate 102. According thereto, the lower fixation means 174 may be used for securing the cover for the optical fibre tray assembly 1 against the lower tray 100 by providing a thereto associated cover fixation stem with the cover, which cover fixation stem projects from the cover, respectively. Thus, the securing of the cover against the lower tray 100 may be further improved. If the lower fixation means 174 is provided alternatively to the lower cover stem receiving opening 146 and the upper cover stem receiving opening 242, further organizing space for the optical fibre elements 111, 112 can be gained in the lower organizing area 108 and the upper organizing area 210, respectively. Furthermore, the lower fixation means 174 may be used e.g. for securing there against another tray provided either with a fixation stem as described above or with a fixation means having a shape similar to the lower fixation means 174. For the latter case, the trays may be secured against each other by means of a tray clamp (not shown) mountable to the fixation means from a lateral side of the trays, respectively. The tray clamp may be formed of an elastic material such as rubber or of a thermoplastic material, while the tray clamp comprises at least two tray clamp fittings connected with each other by a tray clamp bridge. The tray clamp bridge is adapted to bridge a distance between the fixation means which receives the tray clamp fitting, while the tray clamp fitting is adapted to press-fit into the associated interlock channel of the respective fixation means in order to cooperate with the pair of interlocks so as to provide the positive locking between the interlock and the tray clamp fitting in the direction perpendicular to the front surface side of the respective tray.

In view of the preferred embodiment shown in Figure 3, the tray clamp fitting may have a shape corresponding to the rectangular shape of an inner lower interlock channel section 179 formed at a central area between the pair of lower interlocks 174. The present invention is not to be construed to be limited to such a shape. The lower fixation means 174 and the tray clamp may adopt any shape for securing two trays against each other. By means of the tray clamp which may be configured with a number of tray clamp fittings corresponding at least to the number of the trays to be secured against each other, more than two trays may be simply secured against each other, wherein each tray has fixation means corresponding preferably to the above-described lower fixation means 174.

In view of the above, different aspects for improving handling and size of the inventive optical fibre tray assembly have been described with respect to a single preferred embodiment. For instance, these aspects relate to a specific configuration of the splice holder organizing sections and the organizing areas, generally of the holding ribs for holding the optical fibre element in the respective section of the trays, of the guiding channels for guiding the optical fibre elements, of the hinged connection between the lower tray and the upper tray and the therethrough guided optical fibre, of the cover stem receiving openings, of the handle element, of the separated entrances for introducing optical fibre elements adjacent to each other to the optical fibre tray assembly and of the hinged base. The afore-described aspect listing is not final. From the description of the preferred embodiment, further aspects may be derivable. Said different aspects are not necessarily required to be provided in combination with each other. The optical fibre tray assembly may be designed with features relating to one or more aspects thereof as long as the main aspect defined in claim 1 is fulfilled, in order to further improve the optical fibre tray assembly.

### Reference list

- 1: optical fibre tray assembly
- 100: lower tray
- 102: lower support plate
- 104: lower front surface side
- 106: lower wall portion
- 108: lower organizing area
- 110: lower guiding channel
- 111: one optical fibre element
- 112: one further optical fibre element
- 114, 116: longitudinal end side of the lower guiding channel
- 118: lower hinge means
- 120, 122: opposing longitudinal end sides of the lower guiding channels
- 124: bushing
- 126: hinge base element
- 127: lower lateral end side
- 128: lower connection lateral end side
- 130: inner lower guiding channel
- 132: lower separating wall portion
- 134: upper free end side of lower wall portion
- 136: outer lower wall section
- 138: handling recess
- 140: lower splice holder organizing section
- 142: lower latch means
- 144: elevated latch section
- 146: lower cover stem receiving opening
- 147: lower wall portion frame
- 148: lower outer rim
- 150: stop pin
- 152: lower entrance
- 154: lower guiding channel holding rib
- 156: lower longitudinal guiding channel holding rib
- 158: inner lower guiding channel holding rib
- 160: lower organizing holding rib
- 162: inner lower organizing area
- 164: inner lower organizing area entrance
- 166: inner lower organizing area holding rib
- 168: lower splice groove
- 170: RFID-tag support
- 172: lower splice
- 174: lower fixation means
- 176: lower interlock
- 177: lower interlock channel
- 178: lower snapping means
- 179: lower interlock channel section
- 180: lower guiding channel wall portion
- 181: lower chamber
- 200: upper tray
- 202: upper support plate
- 204: upper rear surface side
- 206: upper front surface side
- 208: upper wall portions
- 210: upper organizing area
- 212: upper hinge means
- 214: connection path
- 216: head
- 218: axle elements
- 220: longitudinal slit
- 222: covering rear surface section
- 224: support rear surface section
- 226: intermediate rear surface section
- 228: upper abutment rim
- 230: upper wall section
- 232: outer upper wall section
- 234: handle element
- 236: upper splice holder organizing section
- 238: upper latch means
- 240: latch recess
- 242: upper cover stem receiving opening
- 244: upper guiding channel
- 246: upper lateral end side
- 248: upper holding rib
- 250: upper splice
- 252: upper splice groove
- 254: upper latch section
- 256: upper RFID-tag support cover
- 258: upper snapping means

## Claims

1. An optical fibre tray assembly (1) for organizing a plurality of optical fibre elements (111, 112), comprising:
- a lower tray (100) having a lower support plate (102), from a lower front surface side (104) of which a plurality of lower wall portions (106) project, forming a lower organizing area (108) for organizing at least one optical fibre element (111), said lower tray (100) is provided with a lower hinge means (118), and
- an upper tray (200) having an upper support plate (202) which provides an upper rear surface side (204) for partially covering the lower front surface side (104) of the lower tray (100) and which provides an upper front surface side (206) from which a plurality of upper wall portions (208) project, forming an upper organizing area (210) for organizing at least one further optical fibre element (112), wherein upper hinge means (212) project laterally from the upper support plate (202),
**characterized in that**
said lower and upper hinge means (118; 212) cooperate with each other for pivotably connecting both trays (100; 200) with each other,
and that the upper hinge means (212) provide a connection path (214) for guiding the at least one further optical fibre element (112) received by the lower tray (100) toward the upper tray (200) thereof to be organized in the organizing area (210) of the upper tray (220).

2. The optical fibre tray assembly (1) according to claim 1, **characterized in that** the upper hinge means (212) is hammer-head shaped, wherein the longitudinal end sides of the head (216) are formed as axle elements (218) which are received within a bushing (124) formed by the lower tray (100).

3. The optical fibre tray assembly (1) according to claim 2, **characterized in that** the axle elements (218) are formed of a hollow shaft for guiding the at least one further optical fibre element (112) therethrough.

4. The optical fibre tray assembly (1) according to claim 2 or 3, **characterized in that** the axle elements (218) are hollow and provided with a longitudinal slit (220) extending along an articulation direction of the hinge and that the bushing (124) has a C-shaped cross section adapted to snappingly receive the axle elements (218) and wherein the slit (220) and an opening of the C-shaped bushing (124) are in alignment with each other when the lower tray (100) is covered by the upper tray (200).

5. The optical fibre tray assembly (1) according to any one of the preceding claims, **characterized by** an inner and an outer lower guiding channel (110, 130) arranged parallel to each other and being separated by lower separating wall portions (132).

6. The optical fibre tray assembly (1) according to claim 5, **characterized in that** the outer lower guiding channel (110) is accessible when the lower tray (200) is covered by the upper tray (200).

7. The optical fibre tray assembly (1) according to any one of the preceding claims, **characterized in that** at least two lower wall portions (106) separated from each other by an inner lower organizing area entrance (164) form an inner lower organizing area (162), wherein the inner lower organizing area entrance (164) connects an inside of the inner lower organizing area (162) with an outside thereof, and that the upper rear surface side (204) of the upper tray (200) provides a plurality of rear surface sections (222, 226) for covering the at least one optical fibre element (111) guided on the lower front surface side (104), wherein at least one rear surface section (226) thereof is provided for covering a section of the lower front surface side (104) outside the inner lower organizing area (162) and adjacent the lower inner organizing area entrance (164), when the lower tray (100) is covered by the upper tray (200), and wherein, in the covered state of the lower tray (100), a distance between the at least one rear surface section (226) and the lower front surface side (104) is larger than a distance between the other rear surface section (222) and the lower front surface side (104).

8. The optical fibre tray assembly (1) according to any one of the preceding claims, **characterized in that** the upper tray (200) provides upper rims (228) for abutting against upper free end sides (134) of the plurality of lower wall portions (106), wherein upper wall sections (230) of the upper wall portions (208) arranged at a periphery of the upper support plate (202), project laterally from the upper abutment rims (228).

9. The optical fibre tray assembly (1) according to according to any one of the preceding claims, **characterized in that** a handle element (234) projects laterally from an outer upper wall section (232) and an outer lower wall section (136) is provided with a handling recess (138), which is in alignment with the handle element (234) when the lower tray (100) is covered by the upper tray (200).

10. The optical fibre tray assembly (1) according to any one of the preceding claims, **characterized by** a lower splice holder organizing section (140) provided between the lower hinge means (118) and the lower organizing area (108) and/or an upper splice holder organizing section (236) provided between the upper hinge means (212) and the upper organizing area (210).

11. The optical fibre tray assembly (1) according to claim 7, **characterized by** plural lower and upper latch means (142, 238) adapted to receive one optical fibre element, wherein the upper latch means (238) are provided above the lower latch means (142) when the lower tray (100) is covered by the upper tray (200) and wherein selected lower latch means (142) are provided with elevated latch sections (144) projecting from the covering rear surface section (222) and wherein the upper rear surface side (204) is provided with latch recesses (240) in which the elevated latch sections (144) are received when the lower tray (100) is covered by the upper tray (200).

12. The optical fibre tray assembly (1) according to any one of the preceding claims, **characterized in that** the lower tray (100) has a lower cover stem receiving opening (146) and that the upper tray (200) has an upper cover stem receiving opening (242), that the lower and upper cover stem receiving openings (146, 242) are in alignment when the lower tray (100) is covered by the upper tray (200) and the lower cover stem receiving opening (146) is associated with a snapping means adapted to releasably hold a cover stem projecting from a cover for the optical fibre tray assembly (1).

## Patentansprüche

1. Lichtwellenleiter-Einsatzbaugruppe (1) zum Organisieren von mehreren Lichtwellenleiter-Elementen (111, 112), die Folgendes umfasst:
einen unteren Einsatz (100), der eine untere Auflageplatte (102) hat, wobei von einer unteren Frontflächenseite (104) derselben mehrere untere Wandabschnitte (106) vorspringen, die einen unteren Organisierungsbereich (108) zum Organisieren wenigstens eines Lichtwellenleiter-Elementes (111) bilden, wobei der untere Einsatz (100) mit einem unteren Scharniermittel (118) versehen ist, und
einen oberen Einsatz (200), der eine untere Auflageplatte (202) hat, die eine obere Rückflächenseite (204) bereitstellt, um die untere Frontflächenseite (104) des unteren Einsatzes (100) teilweise abzudecken, und die eine obere Frontflächenseite (206) bereitstellt, von der mehrere obere Wandabschnitte (208) vorspringen, die einen oberen Organisierungsbereich (210) zum Organisieren wenigstens eines weiteren Lichtwellenleiter-Elementes (112) bilden, wobei obere Scharniermittel (212) seitlich von der oberen Auflageplatte (202) vorspringen,
**dadurch gekennzeichnet, dass** die oberen und die unteren Scharniermittel (118; 212) miteinander zusammenwirken, um die beiden Einsätze (100, 200) schwenkbar miteinander zu verbinden,
und dass die oberen Scharniermittel (212) eine Verbindungsbahn (214) bereitstellen, um zumindest ein weiteres Lichtwellenleiter-Element (112), das von dem unteren Einsatz (100) aufgenommen wird, zu dem oberen Einsatz (200) hin zu leiten, um in dem Organisierungsbereich (210) des oberen Einsatzes (200) organisiert zu werden.

2. Lichtwellenleiter-Einsatzbaugruppe (1) nach Anspruch 1, **dadurch gekennzeichnet, dass** das obere Scharniermittel (212) hammerkopfförmig ist, wobei die Längsstirnseiten des Kopfes (216) als Achselemente (218) geformt sind, die innerhalb einer durch den unteren Einsatz (100) geformten Buchse (124) aufgenommen werden.

3. Lichtwellenleiter-Einsatzbaugruppe (1) nach Anspruch 2, **dadurch gekennzeichnet, dass** die Achselemente (218) aus einem hohlen Schaft zum Leiten des wenigstens einen weiteren Lichtwellenleiter-Elementes (112) durch denselben bestehen.

4. Lichtwellenleiter-Einsatzbaugruppe (1) nach Anspruch 2 oder 3, **dadurch gekennzeichnet, dass** die Achselemente (218) hohl und mit einem Längsschlitz (220), der sich entlang einer Gelenkrichtung des Scharniers erstreckt, versehen sind und dass die Buchse (124) einen C-förmigen Querschnitt hat, der dafür eingerichtet ist, die Achselemente (218) schnappend aufzunehmen, und wobei sich der Schlitz (220) und eine Öffnung der C-förmigen Buchse (124) in Ausrichtung miteinander befinden, wenn der untere Einsatz (100) durch den oberen Einsatz (200) abgedeckt wird.

5. Lichtwellenleiter-Einsatzbaugruppe (1) nach einem der vorhergehenden Ansprüche, **gekennzeichnet durch** einen inneren und einen äußeren unteren Führungskanal (110, 130), die parallel zueinander angeordnet sind und **durch** untere Trennwandabschnitte (132) getrennt sind.

6. Lichtwellenleiter-Einsatzbaugruppe (1) nach Anspruch 5, **dadurch gekennzeichnet, dass** der äußere untere Führungskanal (110) zugänglich ist, wenn der untere Einsatz (100) durch den oberen Einsatz (200) abgedeckt wird.

7. Lichtwellenleiter-Einsatzbaugruppe (1) nach einem der vorhergehenden Ansprüche, **dadurch gekennzeichnet, dass** wenigstens zwei untere Wandabschnitte (106), die durch einen inneren unteren Organisierungsbereichseintritt (164) voneinander getrennt werden, einem inneren unteren Organisierungsbereich (162) bilden, wobei der innere untere Organisierungsbereichseintritt (164) eine Innenseite des inneren unteren Organisierungsbereiches (162) mit einer Außenseite desselben verbindet, und dass die obere Rückflächenseite (204) des oberen Einsatzes (200) mehrere Rückflächensektionen (222, 226) bereitstellt, um das wenigstens eine Lichtwellenleiter-Element (111) abzudecken, das auf der unteren Frontflächenseite (104) geführt wird, wobei wenigstens eine Rückflächensektion (226) derselben dafür bereitgestellt wird, eine Sektion der unteren Frontflächenseite (104) außerhalb des inneren unteren Organisierungsbereiches (162) und angrenzend an den inneren unteren Organisierungsbereichseintritt (164), abzudecken, wenn der untere Einsatz (100) durch den oberen Einsatz (200) abgedeckt wird, und wobei, in dem abgedeckten Zustand des unteren Einsatzes (100), ein Abstand zwischen der wenigstens einen Rückflächensektion (226) und der unteren Frontflächenseite (104) größer ist als ein Abstand zwischen der anderen Rückflächensektion (222) und der unteren Frontflächenseite (104).

8. Lichtwellenleiter-Einsatzbaugruppe (1) nach einem der vorhergehenden Ansprüche, **dadurch gekennzeichnet, dass** der obere Einsatz (200) obere Ränder (228) zum Anstoßen an freie Stirnseiten (134) der mehreren unteren Wandabschnitte (106) bereitstellt, wobei obere Wandsektionen (320) der oberen Wandabschnitte (208), die an einem Umfang der oberen Auflageplatte (202) angeordnet sind, seitlich von den oberen Stoßrändern (228) vorspringen.

9. Lichtwellenleiter-Einsatzbaugruppe (1) nach einem der vorhergehenden Ansprüche, **dadurch gekennzeichnet, dass** ein Handgriffelement (234) seitlich von einer äußeren oberen Wandsektion (232) vorspringt und eine äußere untere Wandsektion (136) mit einer Handhabungsaussparung (138) versehen ist, die sich in Ausrichtung mit dem Handgriffelement (234) befindet, wenn der untere Einsatz (100) durch den oberen Einsatz (200) abgedeckt wird.

10. Lichtwellenleiter-Einsatzbaugruppe (1) nach einem der vorhergehenden Ansprüche, **gekennzeichnet durch** eine untere Spleißhalter-Organisierungssektion (140), die zwischen dem unteren Scharniermittel (118) und dem unteren Organisierungsbereich (108) bereitgestellt wird, und/oder eine obere Spleißhalter-Organisierungssektion (236), die zwischen dem oberen Scharniermittel (212) und dem oberen Organisierungsbereich (210) bereitgestellt wird.

11. Lichtwellenleiter-Einsatzbaugruppe (1) nach Anspruch 7, **gekennzeichnet durch** mehrere untere und obere Klinkenmittel (142, 238), die dafür eingerichtet sind, ein Lichtwellenleiter-Element aufzunehmen, wobei die oberen Klinkenmittel (238) oberhalb der unteren Klinkenmittel (142) bereitgestellt werden, wenn der untere Einsatz (100) durch den oberen Einsatz (200) abgedeckt wird, und wobei ausgewählte untere Klinkenmittel (142) mit erhöhten Klinkensektionen (144) versehen sind, die von der abdeckenden Rückflächensektion (222) vorspringen, und wobei die obere Rückflächenseite (204) mit Klinkenaussparungen (240) versehen ist, in denen die erhöhten Klinkensektionen (144) aufgenommen werden, wenn der untere Einsatz (100) durch den oberen Einsatz (200) abgedeckt wird.

12. Lichtwellenleiter-Einsatzbaugruppe (1) nach einem der vorhergehenden Ansprüche, **dadurch gekennzeichnet, dass** der untere Einsatz (100) eine untere Abdeckungsschaft-Aufnahmeöffnung (146) hat und dass der obere Einsatz (200) eine obere Abdeckungsschaft-Aufnahmeöffnung (242) hat, wobei sich die untere und die obere Abdeckungsschaft-Aufnahmeöffnung (146, 242) in Ausrichtung befinden, wenn der untere Einsatz (100) durch den oberen Einsatz (200) abgedeckt wird, und die untere Abdeckungsschaft-Aufnahmeöffnung (146) mit einem Schnappmittel verknüpft ist, das dafür eingerichtet ist, lösbar einen Abdeckungsschaft zu halten, der von einer Abdeckung für die Lichtwellenleiter-Einsatzbaugruppe (1) vorspringt.

## Revendications

1. Assemblage de plateau de fibres optiques (1) pour assembler plusieurs éléments de fibre optique (111, 112), comprenant :
un plateau inférieur (100), comportant une plaque de support inférieure (102), d'un côté d'une surface frontale inférieure (104) de laquelle débordent plusieurs parties de paroi inférieures (105), formant une zone d'assemblage inférieure (108) pour assembler au moins un élément de fibre optique (111), ledit plateau inférieur (100) comportant un moyen de charnière inférieur (118) ; et
un plateau supérieur (200), comportant une plaque de support supérieure (202), établissant un côté d'une surface arrière supérieure (204) pour recouvrir en partie le côté de la surface frontale inférieure (104) du plateau inférieur (100), et établissant un côté d'une surface frontale supérieure (206), de laquelle débordent plusieurs parties de paroi supérieures (208), formant une zone d'assemblage supérieure (210) pour assembler au moins un élément de fibre optique (112) additionnel, des moyens de charnière supérieurs (212) débordant latéralement de la plaque de support supérieure (202);
**caractérisé en ce que** lesdits moyens de charnière inférieurs et supérieurs (118 ; 212) coopèrent les uns avec les autres pour connecter de manière pivotante les deux plateaux (100, 200) l'un à l'autre ;
et **en ce que** les moyens de charnière supérieurs (212) établissent une trajectoire de connexion (214) pour guider au moins un élément de fibre optique (112) additionnel reçu par le plateau inférieur (100), vers le plateau supérieur (200), en vue d'un assemblage dans la zone d'assemblage (210) du plateau supérieur (200).

2. Assemblage de plateau de fibres optiques (1) selon la revendication 1, **caractérisé en ce que** le moyen de charnière supérieur (212) a une forme en tête de marteau, les côtés d'extrémité longitudinale de la tête (216) ayant la forme d'éléments d'essieu (218), reçus dans une douille (124) formée par le plateau inférieur (100).

3. Assemblage de plateau de fibres optiques (1) selon la revendication 2, **caractérisé en ce que** les éléments d'essieu (218) sont formés à partir d'un arbre creux pour guider le au moins un élément de fibre optique additionnel (112) à travers celui-ci.

4. Assemblage de plateau à fibres optiques (1) selon les revendications 2 ou 3, **caractérisé en ce que** les éléments d'essieu (218) sont creux et comportent une fente longitudinale (220) s'étendant le long d'une direction d'articulation de la charnière, et **en ce que** la douille (124) a une section transversale en forme de C, adaptée pour recevoir par encliquetage les éléments d'essieu (218), la fente (220) et une ouverture de la douille en forme de C (124) étant alignées l'une avec l'autre lorsque le plateau inférieur (100) est recouvert par le plateau supérieur (200).

5. Assemblage de plateau de fibres optiques (1) selon l'une quelconque des revendications précédentes, **caractérisé par** des canaux de guidage inférieurs interne et externe (110, 130) agencés de manière parallèle l'un à l'autre et séparés par des parties de paroi de séparation inférieures (132).

6. Assemblage de plateau de fibres optiques (1) selon la revendication 5, **caractérisé en ce que** le canal de guidage inférieur externe (110) est accessible lorsque le plateau inférieur (200) est recouvert par le plateau supérieur (200).

7. Assemblage de plateau de fibres optiques (1) selon l'une quelconque des revendications précédentes, **caractérisé en ce qu'**au moins deux parties de paroi inférieures (106) séparées l'une de l'autre par une entrée de la zone d'assemblage inférieure interne (164) forment une zone d'assemblage inférieure interne (162), l'entrée de la zone d'assemblage inférieure interne (164) connectant une partie interne de la zone d'assemblage inférieure interne (162) à une partie externe de celle-ci, le côté de la surface arrière supérieure (204) du plateau supérieur (200) établissant plusieurs sections de surface arrière (222, 226) pour recouvrir le au moins un élément de fibre optique (111) guidé sur le côté de la surface frontale inférieure (104), au moins une section de surface arrière (226) servant à recouvrir une section du côté de la surface frontale inférieure (104), à l'extérieur de la zone d'assemblage inférieure interne (162) et adjacente à l'entrée de la zone d'assemblage inférieure interne (164), lorsque le plateau inférieur (100) est recouvert par le plateau supérieur (200), et dans lequel, dans l'état couvert du plateau inférieur (100), une distance entre la au moins une section de surface arrière (226) et le côté de la surface frontale inférieur (104) est supérieure à une distance entre l'autre section de surface arrière (222) et le côté de la surface frontale inférieure (104).

8. Assemblage de plateau de fibres optiques (1) selon l'une quelconque des revendications précédentes, **caractérisé en ce que** le plateau supérieur (200) comporte des rebords supérieurs (228) destinés à buter contre les côtés d'extrémité supérieure libre (134) des plusieurs parties de paroi inférieures (106), dans lequel des sections de paroi supérieures (230) des parties de paroi supérieures (208), agencées au niveau d'une périphérie de la plaque de support supérieure (202), débordent latéralement des rebords de butée supérieurs (228).

9. Assemblage de plateau de fibres optiques (1) selon l'une quelconque des revendications précédentes, **caractérisé en ce qu'**un élément de poignée (234) déborde latéralement d'une section de paroi supérieure externe (232), une section de paroi inférieure externe (136) comportant un évidement de manipulation (138), aligné avec l'élément de poignée (234) lorsque le plateau inférieur (100) est recouvert par le plateau supérieur (200).

10. Assemblage de plateau de fibres optiques (1) selon l'une quelconque des revendications précédentes, **caractérisé par** une section d'assemblage d'un support d'épissure inférieur (140) agencée entre les moyens de charnière inférieurs (118) et la zone d'assemblage inférieure (108), et/ou une section d'assemblage d'un support d'épissure supérieur (236), agencée entre les moyens de charnière supérieurs (212) et la zone d'assemblage supérieure (210).

11. Assemblage de plateau de fibres optiques (1) selon la revendication 7, **caractérisé par** plusieurs moyens de verrouillage inférieurs et supérieurs (142, 238), adaptés pour recevoir un élément de fibre optique, les moyens de verrouillage supérieurs (238) étant agencés au-dessus des moyens de verrouillage inférieurs (142) lorsque la plateau inférieur (100) est recouvert par le plateau supérieur (200), et dans lequel des moyens de verrouillage inférieurs sélectionnés (142) comportent des sections de verrouillage surélevées (144) débordant de la section de surface arrière de couverture (222), le côté de la surface arrière supérieure (204) comportant des évidements de verrouillage (240) dans lesquels sont reçues les sections de verrouillage surélevées (144) lorsque le plateau inférieur (100) est recouvert par le plateau supérieur (200).

12. Assemblage de plateau de fibres optiques (1) selon l'une quelconque des revendications précédentes, **caractérisé en ce que** le plateau inférieur (100) comporte une ouverture de réception d'une tige de couverture inférieure (146) et **en ce que** le plateau supérieur (200) comporte une ouverture de réception d'une tige de couverture supérieure (242), les ouvertures de réception de la tige de couverture inférieure et supérieure (146, 242) étant alignées lorsque le plateau inférieur (100) est recouvert par le plateau supérieur (200), l'ouverture de réception de la tige de couverture inférieure (146) étant associée à un moyen d'encliquetage adapté pour retenir de manière amovible une tige de couverture débordant d'une couverture de l'assemblage de plateau de fibres optiques (1).
